(19) Europäisches Patentamt
European Patent Office
Office européen des brevets

(11) **EP 2 309 804 B1**

(12) **EUROPEAN PATENT SPECIFICATION**

(45) Date of publication and mention
of the grant of the patent:
**08.02.2012 Bulletin 2012/06**

(51) Int Cl.:
***H04W 52/02*** *(2009.01)*

(21) Application number: **09172699.2**

(22) Date of filing: **09.10.2009**

(54) **Method for switching off a base station within a cellular communication network**

Verfahren zum Ausschalten einer Basisstation innerhalb eines zellularen Kommunikationsnetzwerks

Procédé de coupure d'une station de base dans un réseau de communication cellulaire

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**13.04.2011 Bulletin 2011/15**

(73) Proprietor: **Alcatel Lucent**
**75008 Paris (FR)**

(72) Inventors:
• **Balageas, Carine**
**91620 Nozay (FR)**
• **Leclerc, Brice**
**91620 Nozay (FR)**

(74) Representative: **Camus, Olivier Jean-Claude et al**
**Cabinet Camus Lebkiri**
**10 rue de la Pépinière**
**75008 Paris (FR)**

(56) References cited:
**US-A1- 2006 153 151     US-B1- 6 628 933**

**Description**

The present invention relates to a method for switching off a base station within a cellular network.

For energy saving reasons, it might be convenient to switch off a base station of a cellular communication network so that the overall energy consumption of the telecommunication network is decreased. For instance, this may be the case during the night period wherein the communication load of a given base station can be relatively low as compared to its communication load during the day.

Since a base station might still be handling ongoing communications at the time of being switched off, it appears necessary to provide a method which avoids a cut of said ongoing communications.

A first general method is disclosed by the patent application US 2006/0153151 whereby a first access point, ending its activities, roams a terminal communication to a second access point.A second general method is described in the patent application WO 1996/008936 of the Qualcomm Company, "Apparatus and method for adding and removing a base station from a cellular communications system", filed on September the 12th 1995, whereby a base station is switched off progressively.

A specific method, relating to emergency calls, is disclosed in the US patent 6,628,933 which describes a method to prevent the dropping of emergency calls by increasing the power of an adjacent base station.Disappointingly such prior art methods cannot prevent cuts of ongoing communications. Moreover, it might problematically lead to coverage holes - i.e. areas without the telecommunication network coverage - which provides a poor grade of service.

Thus, implementing such prior art methods would lead to switching off base stations lately at night to limit the number of communication cuts, which results in limited energy savings due to narrow switch off periods.

Accordingly, the present invention is directed to a method for removing a base station from a communication network that provides unaffected service and that substantially obviates one ore more of the problems due to the limitations and disadvantages of the prior art.

To achieve this and other advantages, and in accordance with the purpose of the invention as embodied and broadly described herein, the present invention relates to a method for switching off a first base station of a telecommunication cellular network, said method comprising the step of progressively decreasing said first base station operations, characterized in that it further comprises the steps of limiting the decrease of said first base station operations when a mobile terminal, performing an ongoing communication handled by said first base station, transmits to the cellular network an alarm report indicating a possible cut of said ongoing communication between said mobile terminal and said first base station.

Thereby, a switching off method according to the invention is performed slowly enough to provide to connected mobile terminals the required time to perform the handover of their ongoing communication to another base station.

Moreover such handover towards other base stations - basically neighboring base stations - is encouraged by having the neighboring cells increasing progressively their operations which, further, expend their covered area and avoids thereby coverage holes.

Also the invention discourages mobile terminals of having their communication, either newly established or already handled through another base station, handled by the switching off base station.

In one embodiment, the limitation in the decrease of the first base station operations results in interrupting the decrease of the first base station operations.

In one embodiment, the alarm report is based on a periodical or an event triggered report.

In one embodiment, the alarm report indicates the existence of a second base station whereto the mobile terminal expects to switch said ongoing communication.

In one embodiment, a handover criterion, periodically analyzed by the mobile terminal to eventually decide a handover of a communication from one base station to another base station, is modified in order to push the handover of said ongoing communication from the first base station to the second base station.

In one embodiment, the second base station operations are progressively increased.

In one embodiment, a cell reselection criterion, periodically analyzed by the mobile terminal to eventually decide a handover of a communication from one base station to another base station, is modified in order to allocate the mobile terminal communications to the second base station.

In one embodiment, the decrease of the first base station operations is significantly increase if the ongoing communication is switched from the first base station towards the second base station.

In one embodiment, base station operations are decreased, respectively increased, by increasing, respectively decreasing, the area covered by said base station.

In one embodiment, the area covered by a base station is increased respectively decreased, by increasing, respectively decreasing, a pilot signal intensity.

The invention also relates to a controller for telecommunication cellular network adapted to switch off a first base station, said controller comprising means for having said first base station progressively decreasing its operations, characterized in that it further comprises means for having a limitation in the decrease of said first base station operations when a mobile terminal, performing an ongoing communication handled by said first base station, transmits to the cellular network an alarm report indicating a possible drop of said ongoing communication between said mobile terminal and said first base station following a method according to any of the previous embodiments.

The accompanying drawings are included to provide a further understanding of the invention and are incorporated in and constitute a part of this specification, to illustrate embodiments of the invention and, together with the description, to explain the principles of the invention:

- Figure 1 is diagram which illustrates a handover criterion implementation according to the invention,
- Figure 2 is a block diagram of a base station operations being switched-off according to one embodiment of the invention, and
- Figure 3 is a sequence of diagrams corresponding to different operations identified in the block diagram of figure 2.

Reference will now be made in detail to the present preferred embodiment of the invention, an example of which is illustrated in the accompanying drawings. Wherever possible, the same reference numerals will be used throughout the drawings to refer to the same or like parts.

An exemplary embodiment of terrestrial cellular mobile telephone system in which the present invention may be embodied is a known Universal Mobile Telecommunication System (UMTS) network.

In such a UMTS network, the invention can be implemented on the basis of a quality of service report transmitted by mobile terminals, either on a periodic reporting mode or on an event triggered reporting mode, as described in the 3GPP consortium radio Resource Control (RRC) Protocol specification and associated standard document. More precisely

- In the periodic reporting mode, a controller called thereafter RNC (for Radio Network Controller) receives a periodic quality report from the terminal mobile, for instance every 500 msec.
- In the event triggered reporting mode, the controller RNC receives a specific event quality report which codes events 1A, 1B, 1C, 1D, 1E, 1F, 2D and 2F as defined in the table thereafter, wherein the first row indicates the code event and the second row indicates its meaning according to the indicate UMTS specification.

| 1A | to add a cell in the active set |
| --- | --- |
| 1B | to remove a cell in the active set |
| 1C | to replace a cell in the active set |
| 1D | to replace the primary cell in the active set |
| 2D | to enter an alarm condition and possibly start inter-frequency or inter-Radio Access Technology measurements |
| 2F | to leave the alarm condition and possibly stop inter-frequency or inter-Radio Access Technology measurements |

It is reminded that a "cell" corresponds to the area covered by a base station, "the active set" corresponds to a list established by a mobile terminal in order to identity cells which can be used for soft handover and "the primary cell" corresponds to the preferred cell by the mobile terminal for handling its communications

Thereafter, event 1D - whereby the mobile terminal reports its desire to replace the primary cell - and event 2D - whereby the mobile terminal reports an alarm condition - might be used as described thereafter during the switching-off of a base station.

A handover criterion, periodically analyzed by the mobile terminal to eventually decide a handover of a communication from one base station to another base station, is modified in order to push the handover of ongoing communications from the first base station to the second base station.

In this UMTS embodiment, known parameters of a handover criterion are modified depending on whether a periodic or an event triggered reporting mode is considered:

- In the periodic reporting mode, a candidate cell replaces the current primary cell in the active set if the following equation is satisfied:

$$\text{Measurement(candidate cell)} - \text{Measurement(current primary cell)} > \text{DropPriRL}$$

Wherein "Measurement(X cell)" corresponds to a quality measurement of the given X cell and "DropPriRL", also called thereafter $H_{1D}$, is a hysteresis parameter aimed to prevent rapid sequences of successive handovers.

To push the handover of the communication from the current cell to the candidate cell, the hysteresis parameter $H_{1D}$ for primary cell modification is significantly reduced, or even put to zero.

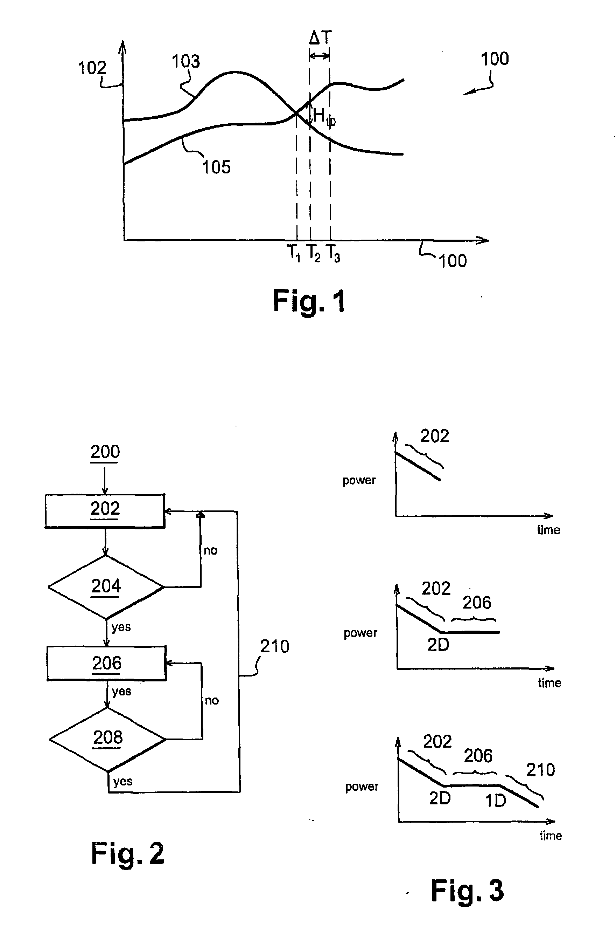

Indeed, as illustrated in figure 1 which represents a transmission quality (axis 102) of both a first base station (103) and a second base station (105) measured by a mobile terminal depending on time (axis 100), a common hysteresis parameter $H_{1D}$ avoids a communication handover at the time - T1 - despite the fact that the measured quality of the active base station is worse than the measured quality of a second base station.

More precisely, the communication handover is performed at a later time - T2 - wherein the difference of measured quality is equal, or superior, to such common hysteresis parameter $H_{1D}$.

In the event triggered reporting mode, a candidate cell replaces the current primary cell - related to the base station to be switched off - in the active set if the following equation as stated, for instance, in the 3GPP document "25.331 Radio Resource Control (RRC)":

$$10\log(M_{candidate}) + CIO_{candidate} \geq 10\log(M_{best}) + CIO_{best} + H_{1D}/2$$

Wherein $M_{candidate}$ is a quality measurement result of a candidate primary cell, $CIO_{candidate}$ is an offset of a candidate primary cell, $M_{best}$ is a quality measurement result of the current best primary cell and $CIO_{best}$ is an offset of the current best primary cell, said cell offsets being used to encourage or discourage a cell selection.

In this case, $CIO_{best}$ and $H_{1D}$ are the parameters put to zero in order to facilitate the handover of the ongoing communication from the base station to be switched off.

Once the handover criterion has been adapted to facilitate communications handovers, the base station to be switched off can progressively reduce its emission power (for instance by reducing a pilot signal intensity) as illustrated in figures 2 and 3.

More precisely, figure 2 is a block diagram which represents a step 200 whereby a controller requires a first base station to be switched off. As a consequence, the transmission power of the first base station is decreased as shown in the corresponding diagram (202) of figure 3.

Accordingly to the invention, such decrease is performed while checking - step 204 - if a mobile terminal, performing an ongoing communication handled by the base station to be switched off - called thereafter first base station - transmits to the cellular network an alarm report indicating a possible cut, or drop, of its ongoing communication between with the first base station.

If this is the case, the mobile terminal sends a 2D alarm report which automatically limits the decrease of the first base station operations i.e. the decrease is significantly reduced or even interrupted as represented in the corresponding diagram (206) of figure 3.

Thereby, it is possible to wait until the mobile terminal switches to a second base station so that the 2D event report is replaced - step 208 of figure 2 - by a 1 D report, which means a successful toward a second base station.

In this case, it is understood that the concerned mobile terminal might not have its communication cut by a decrease in the first base station switching off which accordingly can be continued - step 210. And if another alert occurs for another terminal (204), the algorithm enters in another loop. The algorithm ends when there is no more terminal that might have their communication cut.

In this embodiment, the base station switching off is managed by a controller informed of the radio link quality experienced by the mobile terminal, also known as "User Equipment" or UE.

The controller can force the base station to decrease its power according to certain specifications, for instance linearly.

To push the attached mobile terminals in performing handover while avoiding coverage holes, the controller requires to one or more base stations to increase their transmission power by sending them a request for a higher reference power.

Practically, section 8.3.7 Downlink power control of 3GPP 25.433 "UTRAN lub Interface NodeB Application Part (NBAP) signaling" describes this power balancing procedure whereby a RNC controller sends a DL POWER CONTROL REQUEST message to a base station neighboring the switched off base station.

In this embodiment, the alarm report indicates the existence of a second base station whereto the mobile terminal expects to switch said ongoing communication. Thus, the controller request an increase in neighboring base stations power in order to push the handover of the ongoing communication with the first base station.

It must be underlined that the first base station - to be switched off - might be the only one in the paging area of a mobile terminal in an idle mode so that this first base station is the only one identified by this mobile terminal.

Even if this case should be avoided, it is possible to trigger a cell reselection procedure as defined thereafter wherein a ranking R criterion is used by the mobile terminal to rank in a list the cells satisfying an eligibility criterion S so that a cell will be reselected if it ranks as the highest according to criterion R out of all cells satisfying criterion S.

$$R = Qmeas + Qhyst$$

Wherein Qmeas is a quality measurement and Qhyst is a hysteresis parameter, used to favor or penalize the serving cell, which could be decreased in order to put a disadvantage on the serving cell and then favor cell reselection toward neighboring cell.

The present invention might be performed according to embodiments differing from the one described herein in the context of UMTS. For instance, in the context of the Long Term Evolution (LTE) communication networks, it appears, that an event A2 (indicating a service becoming worse than a threshold) or event B1/B2 (relating to inter- Radio Access Technology mobility) might be used to stop the decrease of a base station.

Also an event A3 (indicating that a neighboring base station becomes "offset better than serving" might be used to continue to decrease the transmitted power. This A3 event shows that last mobiles are performing their handover

The entering condition of the A3 event is

$$Mn + Ofn + Ocn - Hys > Ofs + Ocs + Off$$

Wherein

- Mn is a measurement result of a cell neighboring the switching off cell,
- Ofn is a frequency specific offset of the frequency of said neighbor cell,
- Ocn is a cell specific offset of said neighbor cell,
- Ms is a measurement of the switching off cell,
- Ofs is a frequency specific offset of the switching off cell frequency,
- Ocs is cell specific offset of the switching off cell,
- Hys is hysteresis parameter of the switching off cell for this event,
- Off is an offset parameter for this event

As in the UMTS context, the handover might be encouraged by modifying some criterion. For instance, the parameters (Ofs + Ocs) which define an hysteresis criterion might be put to zero (0) dB while increasing the parameters (Ofn + Ocn).

Such decrease of base station operations might differ from one embodiment to another. According to one embodiment, such decrease is performed by decreasing a pilot signal transmission power but it can clearly be performed according to other implementations.

Independently of the implementation, three steps might be similarly performed by a network implementing the invention.

It must be underlined that, depending on the embodiments, a different number of second base stations might be used to implement the invention toward a common first base station to be switched off. Typically, a plurality of second base stations, neighboring of said first base station, increase their operations to cover with their communication areas the communication area of the first base station before its switching off.

Finally, the invention can also be implemented when a mobile terminal is in an idle mode wherein no ongoing communication is currently transmitted by the mobile terminal while said mobile terminal might still be associated to the first base station to be switched off. In this case, a cell reselection criterion, periodically analyzed by the mobile terminal to eventually decide a handover of a communication from one base station to another base station, can be modified in order to allocate the future mobile terminal communications to a second base station.

**Claims**

1. Method for switching-off a first base station of a telecommunication cellular network, said method comprising the step (202) of progressively decreasing said first base station operations, **characterized in that** it further comprises the step (206) of limiting the decrease of said first base station operations when a mobile terminal, performing an ongoing communication handled by said first base station, transmits to the cellular network an alarm report (2D) indicating a possible drop of said ongoing communication between said mobile terminal and said first base station.

2. Method according to claim 1 wherein the limitation (206) in the decrease of the first base station operations results in interrupting the decrease of the first base station operations.

3. Method according to claim 1 or 2 wherein the alarm report is based on a periodical or an event triggered report.

4. Method according to any of the previous claims wherein the alarm report indicates the existence of a second base station whereto the mobile terminal expects to switch said ongoing communication.

5. Method according claim 4 wherein a handover criterion, periodically analyzed by the mobile terminal to eventually decide a handover of a communication from one base station to another base station, is modified in order to push the handover of said ongoing communication from the first base station to the second base station.

6. Method according to any of the claims 4 or 5 wherein the second base station operations are progressively increased.

7. Method according to any of the claims 4, 5 or 6 wherein a cell reselection criterion, periodically analyzed by the mobile terminal in an idle mode to eventually decide a cell reselection from one base station to another base station, is modified in order to allocate the mobile terminal communications to the second base station.

8. Method according to any of the previous claims wherein the decrease of the first base station operations is significantly increase (210) if the ongoing communication is switched from the first base station towards the second base station.

9. Method according to any of the previous claims wherein base station operations are decreased, respectively increased, by increasing, respectively decreasing, the area covered by said base station.

10. Method according to claim 8 wherein the area covered by a base station is increased respectively decreased, by increasing, respectively decreasing, a pilot signal intensity.

11. Controller for telecommunication cellular network adapted to switch off a first base station, said controller comprising means for having said first base station progressively decreasing its operations, **characterized in that** it further comprises means for having a limitation in the decrease of said first base station operations when a mobile terminal, performing an ongoing communication handled by said first base station, transmits to the cellular network an alarm report indicating a possible drop of said ongoing communication between said mobile terminal and said first base station following a method according to any of the previous claims.

**Patentansprüche**

1. Verfahren zum Abschalten einer ersten Basisstation eines zellularen Telekommunikationsnetzwerks, wobei das besagte Verfahren den Schritt (202) des allmählichen Reduzierens des Betriebs der besagten ersten Basisstation umfasst, **dadurch gekennzeichnet, dass** es weiterhin den Schritt (206) des Begrenzens der Reduzierung des Betriebs der besagten ersten Basisstation umfasst, wenn ein mobiles Endgerät, welches eine von der besagten ersten Basisstation abgewickelte laufende Kommunikation durchführt, eine Alarmmeldung (2D), welche einen möglichen Abbruch der besagten laufenden Kommunikation zwischen dem besagten mobilen Endgerät und der besagten ersten Basisstation anzeigt, an das zellulare Netzwerk überträgt.

2. Verfahren nach Anspruch 1, wobei die Begrenzung (206) in der Reduzierung des Betriebs der ersten Basisstation dazu führt, dass die Reduzierung des Betriebs der ersten Basisstation unterbrochen wird.

3. Verfahren nach Anspruch 1 oder 2, wobei die Alarmmeldung auf einer periodischen oder einer ereignisgesteuerten Meldung basiert.

4. Verfahren nach einem beliebigen der vorstehenden Ansprüche, wobei die Alarmmeldung das Vorhandensein einer zweiten Basisstation, an welche das mobile Endgerät beabsichtigt, die besagte laufende Kommunikation zu schalten, anzeigt.

5. Verfahren nach Anspruch 4, wobei ein Handover-Kriterium, welches von dem mobilen Endgerät periodisch analysiert wird, um gegebenenfalls einen Handover einer Kommunikation von einer Basisstation an eine andere Basisstation zu entscheiden, geändert wird, um den Handover der besagten laufenden Kommunikation von der ersten Basisstation an die zweite Basisstation durchzusetzen.

6. Verfahren nach einem beliebigen der Ansprüche 4 oder 5, wobei der Betrieb der zweiten Basisstation allmählich erhöht wird.

7. Verfahren nach einem beliebigen der Ansprüche 4, 5 oder 6, wobei ein Zellenneuauswahl-Kriterium, welches von dem mobilen Endgerät in einem Idle-Modus periodisch analysiert wird, um gegebenenfalls eine Zellenneuauswahl von einer Basisstation zu einer anderen Basisstation zu entscheiden, geändert wird, um die Kommunikationen des mobilen Endgeräts der zweiten Basisstation zuzuordnen.

8. Verfahren nach einem beliebigen der vorstehenden Ansprüche, wobei die Reduzierung des Betriebs der ersten Basisstation deutlich erhöht (210) wird, wenn die laufende Kommunikation von der ersten Basisstation an die zweite Basisstation geschaltet wird.

9. Verfahren nach einem beliebigen der vorstehenden Ansprüche, wobei der Betrieb der Basisstation durch Erhöhen beziehungsweise Reduzieren der von der besagten Basisstation abgedeckten Zone reduziert beziehungsweise erhöht wird.

10. Verfahren nach Anspruch 8, wobei die von einer Basisstation abgedeckte Zone durch Erhöhen beziehungsweise Reduzieren einer Pilotsignalintensität erhöht beziehungsweise reduziert wird.

11. Controller für ein zellulares Telekommunikationsnetzwerk, welcher dazu ausgelegt ist, eine erste Basisstation abzuschalten, wobei der besagte Controller Mittel umfasst, welche bewirken, dass die besagte erste Basisstation allmählich ihren Betrieb reduziert, **dadurch gekennzeichnet, dass** er weiterhin Mittel umfasst, welche eine Begrenzung einer Reduzierung des Betriebs der besagten ersten Basisstation bewirken, wenn ein mobiles Endgerät, das eine von der besagten ersten Station abgewickelte laufende Kommunikation durchführt, eine Alarmmeldung an das zellulare Netzwerk überträgt, welche einen möglichen Abbruch der besagten laufenden Kommunikation zwischen dem besagten mobilen Endgerät und der besagten ersten Basisstation gemäß einem Verfahren nach einem beliebigen der vorstehenden Ansprüche anzeigt.

## Revendications

1. Procédé pour désactiver une première station de base d'un réseau cellulaire de télécommunications, ledit procédé comprenant l'étape (202) de diminution progressive desdites opérations de la première station de base, **caractérisé en ce qu'**il comprend en outre l'étape (206) de limitation de la diminution desdites opérations de la première station de base lorsqu'un terminal mobile, effectuant une communication en cours gérée par ladite première station de base, transmet au réseau cellulaire un rapport d'alarme (2D) indiquant une coupure possible de ladite communication en cours entre ledit terminal mobile et ladite première station de base.

2. Procédé selon la revendication 1 dans lequel la limitation (206) dans la diminution des opérations de la première station de base entraîne l'interruption de la diminution des opérations de la première station de base.

3. Procédé selon la revendication 1 ou 2 dans lequel le rapport d'alarme est basé sur un rapport périodique ou déclenché par un évènement.

4. Procédé selon l'une quelconque des revendications précédentes dans lequel le rapport d'alarme indique l'existence d'une deuxième station de base avec laquelle le terminal mobile prévoit de faire commuter ladite communication en cours.

5. Procédé selon la revendication 4 dans lequel un critère de transfert, périodiquement analysé par le terminal mobile pour décider finalement un transfert d'une communication entre une station de base et une autre station de base, est modifié afin de forcer le transfert de ladite communication en cours de la première station de base vers la deuxième station de base.

6. Procédé selon l'une quelconque des revendications 4 et 5 dans lequel les opérations de la deuxième station de base sont progressivement augmentées.

7. Procédé selon l'une quelconque des revendications 4, 5 ou 6 dans lequel un critère de resélection de cellule, périodiquement analysé par le terminal mobile dans un mode de veille pour décider finalement une resélection de cellule entre une station de base et une autre station de base, est modifié afin d'attribuer les communications de terminal mobile à la deuxième station de base.

8. Procédé selon l'une quelconque des revendications précédentes dans lequel la diminution des opérations de la première station de base est sensiblement augmentée (210) si la communication en cours est transférée de la première station de base vers la deuxième station de base.

9. Procédé selon l'une quelconque des revendications précédentes dans lequel des opérations de la station de base sont diminuées, respectivement augmentées, en augmentant, en diminuant respectivement, la zone couverte par ladite station de base.

10. Procédé selon la revendication 8 dans lequel la zone couverte par une station de base est augmentée, diminuée respectivement, en augmentant, en diminuant respectivement, une intensité du signal pilote.

11. Contrôleur pour un réseau cellulaire de télécommunications adapté pour désactiver une première station de base, ledit contrôleur comprenant des moyens pour que ladite première station de base diminue progressivement ses opérations, **caractérisé en ce qu'**il comprend en outre des moyens pour avoir une limitation de la diminution desdites opérations de la première station de base lorsqu'un terminal mobile, effectuant une communication en cours gérée par ladite première station de base, transmet au réseau cellulaire un rapport d'alarme indiquant une coupure possible de ladite communication en cours entre ledit terminal mobile et ladite première station de base conformément à un procédé selon l'une quelconque des revendications précédentes.

**Fig. 1**

**Fig. 2**

**Fig. 3**

**EP 2 309 804 B1**

## REFERENCES CITED IN THE DESCRIPTION

### Patent documents cited in the description

- US 20060153151 A
- WO 1996008936 A
- US 6628933 B